# EUROPEAN PATENT APPLICATION

(11) **EP 4 848 824 A1**
(43) Date of publication of application: **02.12.2026**
(21) Application number: 25751214.5
(22) Date of filing: 21.01.2025
(51) Int. Cl.: H04W 40/36, H04W 24/02

(54) **COMMUNICATION METHOD AND RELATED DEVICE**

(30) Priority: 08.02.2024 CN 202410179293
(71) Applicant: HUAWEI TECHNOLOGIES CO., LTD., Shenzhen, Guangdong 518129 (CN)
(72) Inventor: ZHANG, Lele, Shenzhen Guangdong 518129 (CN); LIU, Guoquan, Shenzhen Guangdong 518129 (CN); WANG, Jian, Shenzhen Guangdong 518129 (CN); GAO, Lei, Shenzhen Guangdong 518129 (CN); ZHANG, Chunqing, Shenzhen Guangdong 518129 (CN); YANG, Zili, Shenzhen Guangdong 518129 (CN)
(74) Representative: Huawei European IPR
(86) International application number: PCT/CN2025/073784
(87) International publication number: WO 2025/167612

(57) **Abstract**

This application provides a communication method and a related apparatus, to implement free route switching. The method includes: A first node generates a first data packet, where a destination MAC address of the first data packet is a MAC address of any node in a multi-hop network or a broadcast MAC address; and sends the first data packet on a broadcast channel. Correspondingly, a second node receives the first data packet, and determines that the destination MAC address of the first data packet is a MAC address of any neighboring node of the first node or the broadcast MAC address.

## Description

This application claims priority to Chinese Patent Application No. 202410179293.8, filed with the China National Intellectual Property Administration on February 8, 2024 and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

SparkLink (near link/spark link) is a new short-range wireless communication technology, is used to benchmark against conventional technologies such as Bluetooth (Bluetooth) and wireless fidelity (wireless fidelity, Wi-Fi), and is an enhanced edition of "Wi-Fi + Bluetooth" in combination.

However, the SparkLink inherits a one-to-many G/T mode of Bluetooth. In this mode, node roles are classified into two types: a G node (parent node) and a T node (child node). If a plurality of T nodes are bound to one G node, the T nodes can communicate only with the bound parent node, and there is no other standby parent node. In other words, if the SparkLink continues to use the G/T mode, a route cannot be freely switched.

### SUMMARY

This application provides a communication method and a related apparatus, to implement free route switching.

According to a first aspect, this application provides a communication method, and the method may be applied to a first node. For example, the method may be performed by the first node, or may be performed by a component (for example, a chip or a chip system) configured in the first node, or may be implemented by a logical module or software that can implement all or some functions of the first node. This is not limited in this application. It should be understood that the first node in this application may be a node in a multi-hop network formed based on a wireless communication technology (for example, SparkLink, Bluetooth, Wi-Fi, or another short-range wireless communication technology).

For example, the method includes: generating a first data packet, where a destination medium access control (medium access control, MAC) address of the first data packet is a MAC address of any neighboring node of the first node or a broadcast MAC address; sending the first data packet on a broadcast channel.

It may be understood that a node identified by a source address of the first data packet encapsulated at a network layer may be the first node or may be another node. If the node is the first node, a service corresponding to the first data packet is initiated by the first node. If the node is the another node, the first data packet may be generated based on a data packet from the another node.

It may be further understood that the neighboring node of the first node is a node located in a communication domain of the first node, and the communication domain of the first node is a range that can be covered by a radio wave sent by the first node.

The broadcast channel in this application may be one of a plurality of (for example, three) predefined broadcast channels. It may be understood that a data packet generated by a node may be sent on a plurality of predefined broadcast channels in turn.

For example, when the first node is a node in a multi-hop network formed based on the SparkLink technology, the broadcast MAC address is a predefined SparkLink broadcast MAC address.

Based on this technical solution, the data packet is sent on the broadcast channel, so that another node can receive the data packet on the broadcast channel. In other words, in this application, any node located in the multi-hop network may send a data packet to another node or receive a data packet from another node on the broadcast channel, and does not need to communicate with a parent node through an encrypted channel formed between the node and the parent node. Therefore, free route switching can be implemented. In addition, in this manner of sending and receiving data packets on the broadcast channel, communication can be performed without waiting for a slot allocated to the node to be reached. This effectively reduces an end-to-end communication delay.

With reference to the first aspect, in some implementations of the first aspect, the destination MAC address of the first data packet is a MAC address of a second node, and the second node is a neighboring node of the first node; and the method further includes: repeatedly sending the first data packet on the broadcast channel if no acknowledgment (acknowledgment, ACK) packet from the second node is received within preset duration since the first data packet is sent.

A destination MAC address of the ACK packet is a MAC address of the first node.

Based on this solution, the manner in which the second node returns the ACK packet to the first node can improve data transmission reliability.

With reference to the first aspect, in some implementations of the first aspect, the method further includes: sending a second data packet on the broadcast channel if no ACK packet from the second node is received within the preset duration since the first data packet is repeatedly sent for an N^{th} time, where N is a positive integer.

N is an upper limit of a quantity of times of repeated sending. A destination MAC address of the second data packet is different from the destination MAC address of the first data packet, and a source MAC address of the second data packet is the same as a source MAC address of the first data packet. In other words, a difference between the first data packet and the second data packet lies in that destination MAC addresses are different. In other words, the second data packet re-sent by the second node may be a packet obtained by modifying the destination MAC address of the first data packet sent last time.

Based on this solution, the manner in which the second node re-sends the second data packet can further improve data transmission reliability.

According to a second aspect, this application provides a communication method, and the method may be applied to a second node. For example, the method may be performed by the second node, or may be performed by a component (for example, a chip or a chip system) configured in the second node, or may be implemented by a logical module or software that can implement all or some functions of the second node. This is not limited in this application. It should be understood that the second node in this application may be a neighboring node of a first node in a multi-hop network formed based on a wireless communication technology (for example, SparkLink, Bluetooth, Wi-Fi, or another short-range wireless communication technology).

For example, the method includes: receiving a first data packet from the first node on a broadcast channel, where a destination MAC address of the first data packet is a MAC address of any neighboring node of the first node or a broadcast MAC address, and the first node is a node in the multi-hop network; and determining that the destination MAC address of the first data packet is the broadcast MAC address or a MAC address of any neighboring node of the first node.

For descriptions of the first data packet, any node in the multi-hop network, and the broadcast MAC address, refer to the descriptions in the first aspect. Details are not described herein again.

Based on this technical solution, the data packet is sent on the broadcast channel, so that another node can receive the data packet on the broadcast channel. In other words, in this application, any node located in the multi-hop network may send a data packet to another node or receive a data packet from another node on the broadcast channel, and does not need to communicate with a parent node through an encrypted channel formed between the node and the parent node. Therefore, free route switching can be implemented. In addition, in this manner of sending and receiving data packets on the broadcast channel, communication can be performed without waiting for a slot allocated to the node to be reached. This effectively reduces an end-to-end communication delay.

It may be understood that all nodes (namely, all neighboring nodes of the first node) in a communication domain of the first node may receive the first data packet sent by the first node on the broadcast channel, and the destination MAC address of the first data packet may be a MAC address of any node or may be the broadcast MAC address.

For example, when the destination MAC address of the first data packet is not the broadcast MAC address, a node (for example, the second node) that receives the first data packet needs to further determine whether the destination MAC address is consistent with a MAC address of the node. If the destination MAC address is inconsistent with the MAC address of the node, the node discards the first data packet. If the destination MAC address is consistent with the MAC address of the node, the node returns an ACK packet, where the ACK packet indicates that the second node has received the first data packet.

Optionally, the destination MAC address of the first data packet is a MAC address of any neighboring node of the first node, but is not the MAC address of the second node, and the method further includes: discarding the first data packet.

Optionally, the destination MAC address of the first data packet is the MAC address of the second node, and the method further includes: sending the ACK packet to the first node.

With reference to the second aspect, in some implementations of the second aspect, after the second node sends the ACK packet to the first node, the method further includes: determining whether the second node is a forwarding node; and when the second node is a forwarding node, generating a third data packet based on payload data in the first data packet, and sending the third data packet on the broadcast channel; or when the second node is not a forwarding node, parsing the first data packet or discarding the first data packet.

A source MAC address of the third data packet is different from that of the first data packet, and a destination MAC address of the third data packet is a MAC address of any node or the broadcast MAC address.

It may be understood that, when the destination MAC address of the first data packet is a MAC address of any node, the destination MAC address of the third data packet is a MAC address of any node; and when the destination MAC address of the first data packet is the broadcast MAC address, the destination MAC address of the third data packet is the broadcast address.

With reference to the second aspect, in some implementations of the second aspect, determining whether the second node is a forwarding node includes: obtaining a destination address in a network layer address of the first data packet; and determining, based on the destination address, whether the second node is a forwarding node.

The network layer address is an address encapsulated at a network layer, and the address may be an internet protocol (internet protocol, IP) address or another network layer address compatible with the wireless communication technology. This is not limited in this application.

Optionally, the destination MAC address of the first data packet is a MAC address of any node, and a node identified by the destination address in the network layer address of the first data packet is any neighboring node of the first node.

For example, when the node identified by the destination address is consistent with the second node, it is determined that the second node is not a forwarding node; or when the node identified by the destination address is inconsistent with the second node, it is determined that the second node is a forwarding node.

It may be understood that, when the destination MAC address of the first data packet is a MAC address of any node, and it is determined that the second node is not a forwarding node, the first data packet is parsed.

Optionally, the destination MAC address of the first data packet is the broadcast MAC address, and the destination address in the network layer address of the first data packet is a multicast address or a broadcast address.

For example, if nodes identified by the destination address include the second node, it is determined that the second node is a forwarding node; or if nodes identified by the nodes identified by the destination address do not include the second node, it is determined that the second node is not a forwarding node.

It may be understood that, when the destination MAC address of the first data packet is the broadcast MAC address and it is determined that the second node is not a forwarding node, the first data packet is discarded.

Based on this solution, a broadcast storm can be effectively avoided.

With reference to the first aspect and the second aspect, in some implementations, the destination MAC address of the first data packet is the broadcast MAC address, and the first data packet is a broadcast packet or a multicast packet.

The multicast packet means that the destination address in the network layer address of the first data packet is a multicast address (for example, a multicast IP), and the broadcast packet means that the destination address in the network layer address of the first data packet is a broadcast address (for example, a broadcast IP).

With reference to the first aspect and the second aspect, in some implementations, the first data packet is carried in a broadcast frame, and the broadcast frame is generated based on a predefined basic frame structure.

With reference to the first aspect and the second aspect, in some implementations, the destination MAC address of the first data packet is a MAC address of any node in the multi-hop network, and the first data packet is a unicast packet.

It may be understood that the unicast packet means that the node identified by the destination address in the network layer address of the first data packet is unique.

With reference to the first aspect and the second aspect, in some implementations, the first data packet is carried in a unicast frame, and the unicast frame is generated based on the predefined basic frame structure.

With reference to the first aspect and the second aspect, in some implementations, the ACK packet is carried in an ACK frame, and the ACK frame is generated based on the predefined basic frame structure.

It may be understood that, because the ACK packet is sent for the unicast packet, the source MAC address of the ACK packet is the same as the destination MAC of the first data packet, and the destination MAC address of the ACK packet is the same as the source MAC of the first data packet.

With reference to the first aspect and the second aspect, in some implementations, the basic frame structure includes an indication field of a data type.

The indication field of the data type may indicate a data type of the first data packet.

With reference to the first aspect and the second aspect, in some implementations, the indication field of the data type is 0xFF, and the data type of the first data packet is higher layer broadcast data.

With reference to the first aspect and the second aspect, in some implementations, the basic frame structure includes an indication field of a frame type, and the frame type includes a unicast frame, a broadcast frame, or an ACK frame.

The indication field of the frame type may indicate a frame type to which the first data packet belongs.

With reference to the first aspect and the second aspect, in some implementations, when the indication field of the frame type is 0x00, the frame type is the unicast frame; when the indication field of the frame type is 0x01, the frame type is the ACK frame; and when the indication field of the frame type is 0x02, the frame type is the broadcast frame.

It should be understood that a value of the frame type indication field corresponding to each frame type may alternatively be another value. This is not limited in this application.

With reference to the first aspect and the second aspect, in some implementations, the basic frame structure includes an indication field of broadcast-based transmission networking.

With reference to the first aspect and the second aspect, in some implementations, the indication field of the broadcast-based transmission networking is 0x1C or 0x1D.

It should be understood that the indication field of the broadcast-based transmission networking may alternatively be another value. This is not limited in this application.

According to a third aspect, this application provides a communication apparatus, including a module or a unit configured to implement the method according to either of the foregoing aspects and any possible implementation of either of the foregoing aspects. It should be understood that each module or unit may implement a corresponding function by executing a computer program.

According to a fourth aspect, this application provides a communication apparatus, including a processor. The processor is configured to perform the method according to either of the foregoing aspects and any possible implementation of either of the foregoing aspects.

The communication apparatus may further include a memory, configured to store instructions and data. The memory is coupled to the processor, and when executing the instructions stored in the memory, the processor can implement the method described in the foregoing aspects.

The communication apparatus may further include a communication interface. The communication interface is used by the apparatus to communicate with another device. For example, the communication interface may be a transceiver, a circuit, a bus, a module, or another type of communication interface.

According to a fifth aspect, this application provides a chip system. The chip system includes at least one processor, configured to support implementation of functions in either of the foregoing aspects and any possible implementation of either of the foregoing aspects, for example, receiving or processing data and/or information in the foregoing method.

In a possible design, the chip system further includes a memory, the memory is configured to store program instructions and data, and the memory is located inside or outside the processor.

The chip system may include a chip, or may include a chip and another discrete device.

According to a sixth aspect, this application provides a computer-readable storage medium, including a computer program. When the computer program runs on a computer, the computer is enabled to implement the method according to either of the foregoing aspects and any possible implementation of either of the foregoing aspects.

According to a seventh aspect, this application provides a computer program product. The computer program product includes a computer program (which may also be referred to as code or instructions), and when the computer program runs, a computer is enabled to perform the method according to either of the foregoing aspects and any possible implementation of either of the foregoing aspects.

According to an eighth aspect, this application provides a communication system, including the first node and the second node. The first node is configured to perform the method in any one of the first aspect and the possible implementations of the first aspect, and the second node is configured to perform the method in any one of the second aspect and the possible implementations of the second aspect.

It should be understood that the third aspect to the eighth aspect of this application correspond to the technical solutions of the first aspect or the second aspect of this application, and that beneficial effect achieved in the aspects and corresponding feasible implementations are similar. Details are not described again.

### BRIEF DESCRIPTION OF DRAWINGS

FIG. 1 shows a tree topology according to an embodiment of this application;
FIG. 2 is a diagram of a transmission delay required for communication between a node R and a node L;
FIG. 3 shows a graph topology according to an embodiment of this application;
FIG. 4 is a schematic flowchart of a communication method according to an embodiment of this application;
FIG. 5 is a diagram of a predefined basic frame structure according to an embodiment of this application;
FIG. 6 is a diagram of a frame format according to an embodiment of this application;
FIG. 7A and FIG. 7B are another schematic flowchart of a communication method according to an embodiment of this application;
FIG. 8A and FIG. 8B are another schematic flowchart of a communication method according to an embodiment of this application;
FIG. 9 is a block diagram of a communication apparatus according to an embodiment of this application; and
FIG. 10 is another block diagram of a communication apparatus according to an embodiment of this application.

### DESCRIPTION OF EMBODIMENTS

The following describes the technical solutions of this application with reference to accompanying drawings.

For ease of understanding of embodiments of this application, the following descriptions are first provided.

First, in embodiments of this application, prefix words such as "first" and "second" are merely used for distinguishing and describing different things belonging to a same name category, and are not intended to limit a sequence, sizes, or a quantity of things. For example, a "first node" and a "second node" are merely different nodes, and a quantity or a priority relationship of the nodes is not limited. For another example, a "first data packet" and a "second data packet" are merely different packets, and there is no time sequence relationship, size relationship, or priority relationship between the two packets.

Second, "sending" and "receiving" in embodiments of this application indicate a signal transmission direction. For example, "sending an ACK packet to a first node" may be understood as that a destination end of the ACK packet is the first node, and may include directly sending the ACK packet through an air interface, or indirectly sending the ACK packet by another unit or module through an air interface. "Receiving an ACK packet from a second node" may be understood as that a source end of the ACK packet is the second node, and may include directly receiving the ACK packet from the second node through an air interface, or may include indirectly receiving the ACK packet of the second node from another unit or module through an air interface. "Sending" may alternatively be understood as "outputting" of a chip interface, and "receiving" may alternatively be understood as "inputting" of the chip interface.

In other words, sending and receiving may be performed between nodes, for example, between the first node and the second node; or may be performed within a node, for example, sending or receiving between components, modules, chips, software modules, or hardware modules in a device through a bus, a cable, or an interface.

It may be understood that, before information is sent from a source end to a destination end, necessary processing such as encoding and modulation may be performed on the information. After receiving the information from the source end, the destination end may also perform corresponding processing such as decoding and demodulation, to interpret valid information from the source end. Similar descriptions in this application may be understood similarly, and details are not described again.

Third, in embodiments of this application, "at least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. The character "/" usually represents an "or" relationship between the associated objects, but does not exclude an "and" relationship between the associated objects. A specific represented meaning may be understood with reference to the context. "At least one of the following items (pieces)" or a similar expression thereof means any combination of these items, including any combination of singular items (pieces) or plural items (pieces). For example, at least one item (piece) of a, b, or c may indicate a, b, c, a and b, a and c, b and c, or a, b, and c, where a, b, and c each may be singular or plural.

Fourth, in embodiments of this application, the descriptions "when...", "in a case that...", "if", and the like all mean that a node performs corresponding processing in an objective case, but are not intended to limit time, do not require the node to necessarily have a determining action during implementation, and do not mean another limitation.

Fifth, predefinition in this application may be understood as definition, predefinition, storage, prestorage, pre-negotiation, pre-configuration, solidifying, or pre-burning.

For ease of understanding of embodiments provided in this application, the following describes in detail terms in this application.
1. Mesh (mesh) network: a multi-node, centerless, and self-organized wireless multi-hop communication network. Any wireless device node in the network can function as a router to send and receive signals, and can dynamically maintain connection and communication with one or more other nodes in any way.

A mesh network topology form is not fixed, and adaptively changes completely based on channel quality between nodes. For example, a mesh network topology may include a chain topology, a star topology, and a mesh topology.

The wireless mesh network can communicate with another network to collaboratively resolve a communication problem in most areas that are not covered by a wired network.

2. Zigbee (Zigbee): a short-range wireless mesh protocol stack based on the Institute of Electrical and Electronics Engineers (institute of electrical and electronics engineers, IEEE) 802.15.4. This technology is mainly applied to low-speed communication networks, and features low power consumption and network functions, especially routing functions.

3. OpenThread: an open-source wireless short-range mesh network stack based on the Thread protocol. The Thread specification establishes a reliable, secure, and energy-efficient wireless communication protocol, which is applicable to devices with limited resources, such as smart home devices and commercial buildings.

OpenThread includes a complete network layer range of Thread, including functions such as internet protocol version 6 (Internet Protocol Version 6, IPv6), IPv6-based low-speed wireless personal area network standard (6LoWPAN for short), IEEE 802.15.4 with MAC security, mesh link establishment, and mesh routing.

4. Wi-SUN alliance: a Sub1G-based short-range wireless mesh standard organization whose standards are widely used in scalable networking technologies in industrial internet of things (industrial internet of things, IIOT) scenarios.

5. SparkLink is a new short-range wireless communication technology, is used to benchmark against conventional technologies such as Bluetooth and Wi-Fi, and is an enhanced version of "Wi-Fi + Bluetooth" in combination.

6. Root (root) node: an aggregation node on a wireless mesh network. It is responsible for topology connection drawing and route calculation.

7. Endpoint (endpoint): a terminal node on a wireless mesh network. It is responsible for discovering neighbors and reporting parent-child relationships to a root node for route calculation.

8. Neighboring node: For a node, a node located in a communication domain of the node is referred to as a neighboring node of the node. The communication domain is a range that can be covered by a radio wave sent by the node.

The technical solutions provided in embodiments of this application may be applied to a wireless communication system, or short-range wireless communication in the wireless communication system, for example, SparkLink, Bluetooth, or Wi-Fi.

The technical solutions provided in embodiments of this application may be further applied to a narrowband SparkLink Bluetooth low energy (Bluetooth low energy, BLE) multi-hop networking scenario, and in the networking scenario, data sending and receiving frequencies are not high. For example, in a smart home scenario, a node occasionally (for example, at an interval of several minutes to several hours) sends data once or receives data once.

It may be understood that both the root node and the endpoint in this application are devices having a radio frequency transceiver of a wireless communication technology. The root node may be, for example, a gateway, a bridge, or a border router. The endpoint may be, for example, a smart bulb, a smart home device, or a smart meter. Specific forms of the root node and the endpoint are not limited in this application.

For example, the following shows several scenarios in which a mesh network needs to be used for wireless connection: 1. In an energy home user scenario, a surplus photovoltaic power generation of a user causes extra overheads of a power grid company. Therefore, rigid monitoring with an extremely low delay is required. In this scenario, controllers are usually distributed on a rooftop and in a basement. Wireless connection is performed through a multi-hop mesh network, and this requires a high-reliability and stable-delay protocol capability for support. 2. In an all-in-one smart home scenario, there are more than 100 nodes. A single-hop star network cannot cover all the nodes, and a multi-hop mesh network is required for support. 3. A wireless battery management system includes hundreds of wireless batteries. Therefore, a high-reliability and low-delay mesh network protocol capability needs to be constructed to support reliable operation and maintenance of a battery system in a new energy vehicle.

Currently, there are mainly mesh network protocols based on the following technologies: an open-source short-range wireless mesh protocol stack based on the Thread protocol, a Zigbee-based short-range wireless mesh protocol stack, a Sub1G-based short-range wireless mesh, and a mesh network protocol stack based on the Bluetooth technology.

The open-source short-range wireless mesh protocol stack based on the Thread protocol is widely used in smart home scenarios. In a smart home scenario, link quality is fixed, and networking stability is related to a location and a distance. Therefore, OpenThread uses distance vector-based routing information protocol (routing information protocol, RIP) routing and combines a flooding manner. However, this manner can only ensure strong competitiveness in a small range (less than 50 nodes), and further has problems of a low transmission rate and a low bandwidth.

The ZigBee-based short-range wireless mesh protocol stack is mainly used in smart home scenarios. In a Zigbee networking scenario, an ad hoc (Ad Hoc) network uses ad hoc on-demand distance vector routing (Ad hoc on-demand distance vector routing, AODV) for routing. In this manner, a communication rate is low, and a quantity of channels is small. In addition, this on-demand routing forwarding mode increases protocol overheads, and therefore a transmission delay cannot be ensured.

The Sub1G-based short-range wireless mesh is widely used in scalable networking technologies in IIoT scenarios. However, an applicable frequency band of the mesh is established on the sub-1G, which is not universal. In addition, hardware costs are high, and differentiated competitiveness is not strong.

In the mesh network protocol stack based on the Bluetooth technology, a packet is forwarded through flooding. However, this manner of forwarding a packet through flooding causes a broadcast storm, and the broadcast storm can be avoided only by extending a sending interval or limiting a forwarding node. Although this manner avoids the broadcast storm, a communication delay is increased.

With emergence of the SparkLink technology, a mesh network based on the SparkLink technology also emerges. However, the SparkLink inherits a G/T mode of Bluetooth. In this mode, node roles are classified into two types: a G node (parent node) and a T node (child node). Once two nodes are bound, the two nodes can communicate only with each other, and cannot communicate with another node. In other words, a T node has only one parent node for communication, and has no other standby parent node. It can be learned that the one-to-many G/T mode naturally forms a tree topology, and a many-to-many graph topology cannot be obtained. Consequently, a route cannot be freely switched. Therefore, once a link of the parent node deteriorates, it is difficult for the child node to switch to a standby parent node with a better link for communication, and an end-to-end communication delay cannot be ensured.

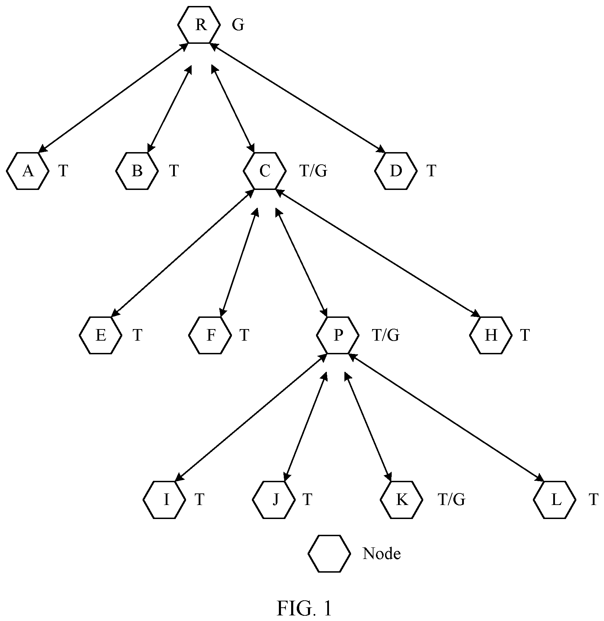

FIG. 1 shows a tree topology. As shown in FIG. 1, in the tree topology, a node R is bound to four nodes (a node A, a node B, a node C, and a node D), the node C is bound to four nodes (a node E, a node F, a node P, and a node H), and the node C is bound to four nodes (a node I, a node J, a node K, and a node L). The binding relationship cannot be changed. The 12 nodes include four G nodes (the node R, the node C, the node J, and the node K) and 12 T nodes (nodes other than the node R). Three T nodes in the 12 T nodes function as both G nodes and T nodes. In other words, one node is connected to a plurality of nodes, the node may be referred to as a root node of the plurality of nodes, and the plurality of nodes may be referred to as child nodes of the node.

As shown in FIG. 1, two nodes (for example, the node C and the node P) that are bound to each other may directly communicate with each other without the need of forwarding through another node. When nodes that are not bound to each other need to communicate with each other, forwarding through an intermediate node is required. For example, when the node R communicates with the node L, forwarding through the node C and the node P is required.

Further, in a G/T mode, if several T nodes are bound to one G node, the G node separately allocates slots used for data transmission to the T nodes. In a periodicity, the node G communicates with these T nodes by using the pre-allocated slots. Even if these T nodes do not have resources for communication in the agreed slots, these slots are consumed. Consequently, an end-to-end delay is not the shortest.

With reference to the topology structure shown in FIG. 1, when the node R sends data to the node L, the data needs to first pass through the node C, and then pass through the node G. When a data packet is forwarded at relay nodes (the node C and the node G), data can be transmitted only when preconfigured slots are reached. Consequently, an end-to-end delay is not a minimum delay.

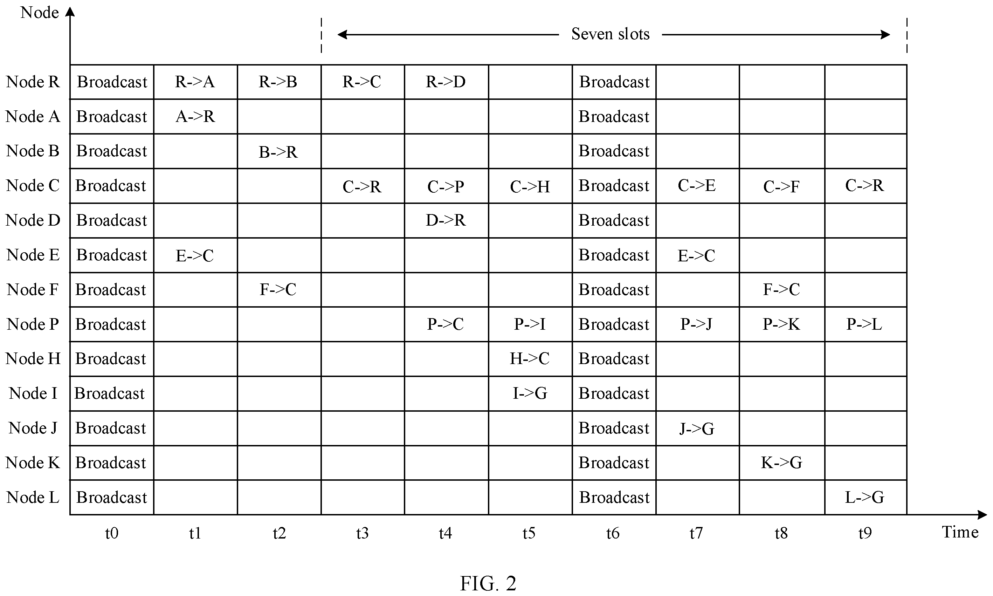

FIG. 2 shows a transmission delay required for communication between the node R and the node L. As shown in FIG. 2, a horizontal coordinate represents time, and a vertical coordinate represents a node. At a moment t3, the node R sends a data packet 1 to the node C. After receiving the data packet 1, the node C sends the data packet 1 to the node P at a moment t4. After receiving the data packet 1, the node G can send the data packet 1 to the node L only at a moment t9. Therefore, it can be learned that total required duration when the node R sends the data packet 1 to the node L is Δt=t9-t2. If it is assumed that each moment corresponds to one slot, when the node R sends data 1 to the node L, the node L can receive the data 1 only after a total interval of seven slots. In other words, scheduling at a link layer depends on pre-allocated slots, and an ultra-low delay of per-hop sending and receiving may not be implemented.

In view of this, embodiments of this application provide a communication method and a related apparatus. In the method, a node sends a data packet on a predefined broadcast channel, so that all neighboring nodes in a communication domain of the node can receive the data packet on the broadcast channel. In other words, all the nodes are in a connectionless state, and only need to listen to the data packet on the broadcast channel. Therefore, when the sending node needs to communicate with another node, even if link quality of a link is poor, the sending node can still communicate with the another node through another link with better link quality, thereby implementing free route switching.

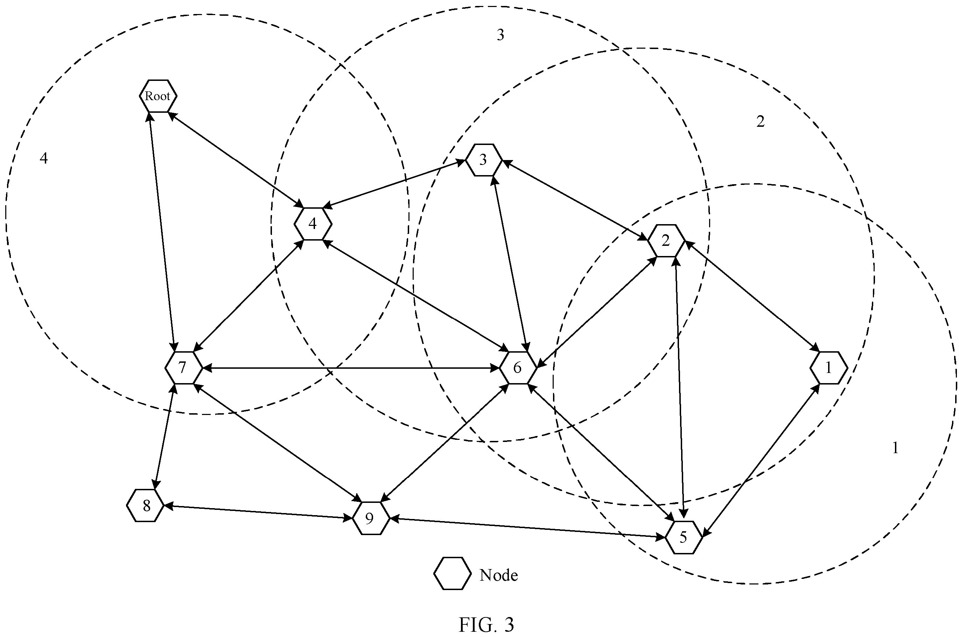

Before the method provided in embodiments of this application is described, a topology structure applicable to the communication method provided in embodiments of this application is first described with reference to FIG. 3. It should be understood that the topology structure may be a graph topology of a multi-hop network formed based on a wireless communication technology.

FIG. 3 shows a graph topology according to an embodiment of this application. As shown in FIG. 3, the topology structure includes one root node and nine (or more) endpoints. All the endpoints may communicate with the root node, and all the endpoints may also communicate with each other. Each node has its own communication domain. A node located in a communication domain of a node may directly communicate with the node, and communication between a node located outside the communication domain of the node and the node requires forwarding of a plurality of nodes. In other words, a node in a communication domain of a node may directly communicate with the node without forwarding of another node, and communication between a node outside the communication domain of the node and the node requires forwarding of another node. For example, a node 1 and a node 2 may directly communicate with each other, and the node 1 and a node 3 may communicate with each other through forwarding of the node 2.

As shown in FIG. 3, an area in each dashed circle is a communication domain. For example, a communication domain of the root node is an area in a dashed circle 4 in FIG. 3, and a communication domain of the node 1 is an area in a dashed circle 1 in FIG. 3.

For example, when another endpoint needs to send a data packet to the root node, if the another node (for example, the node 2) is not in the communication domain of the root node, the node 2 needs to forward the data packet through another endpoint, so that the data packet is sent from the node 2 to the root node. It should be noted that, in each process of forwarding a data packet, each endpoint needs to perform forwarding through a parent node of the endpoint, and generally does not perform forwarding through a child node of the endpoint. Each endpoint may determine the parent node and the child node of the node based on a stored distance between each node and the root node. For example, a distance between the node 2 and the root node is a 1, and a distance between the node 3 and the root node is a length 2. If the distance 1 is greater than the distance 1, the node 3 is determined as a parent node of the node 2; or if the distance 1 is less than the distance 2, the node 3 is determined as a child node of the node 2.

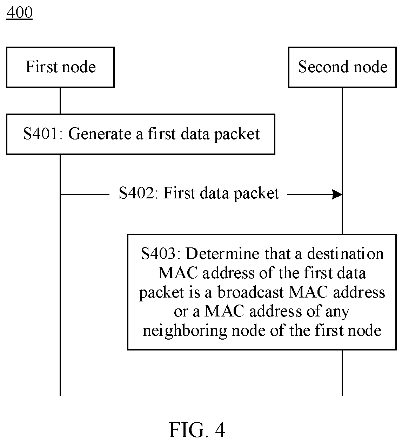

With reference to FIG. 4, the following describes in detail the communication method provided in embodiments of this application. In a flowchart shown in FIG. 4, the method is shown from a perspective of node interaction. However, an execution body of the method is not limited in this application. For example, a first node in FIG. 4 may alternatively be a chip, a chip system, or a processor that supports the first node in implementing the method, or may be a logical module or software that can implement all or some functions of the first node. A second node in FIG. 4 may alternatively be a chip, a chip system, or a processor that supports the second node in implementing the method, or may be a logical module or software that can implement all or some functions of the second node.

FIG. 4 is a schematic flowchart of a communication method 400 according to an embodiment of this application. In the method 400, the first node is a node (for example, the node 1 in FIG. 3) in a multi-hop network formed based on a wireless communication technology, and the second node is a neighboring node (for example, the node 2 in FIG. 3) of the first node.

As shown in FIG. 4, the method 400 may include S401 to S403. The following describes the steps in the method 400 in detail.

S401: The first node generates a first data packet. The first data packet includes a destination MAC address field, and the destination MAC address field is used to carry a destination address of the first data packet.

For example, the destination MAC address of the first data packet may be a MAC address of any neighboring node of the first node in the multi-hop network; or the destination MAC address of the first data packet is a broadcast MAC address, and the broadcast MAC address is a predefined broadcast MAC address. For example, the broadcast MAC address is ff:ff:ff:ff:ff:ff (6 bytes).

It should be noted that the destination MAC address of the first data packet is specifically a MAC address of any node in the multi-hop network or the broadcast MAC address, and is determined by the first node based on a destination address encapsulated at a data link layer for the first data packet.

For example, if a destination address encapsulated at a network layer for the first data packet is a unicast address, the destination MAC address of the first data packet is a MAC address of any node in the multi-hop network; or if a destination address encapsulated at a network layer for the first data packet is a multicast address or a broadcast address, the destination MAC address of the first data packet is the broadcast MAC address.

Optionally, the first data packet further includes a source MAC address field, and the source MAC address field is used to carry a source address of the first data packet. Because the first data packet is sent by the first node, the source MAC address of the first packet is a MAC address of the first node.

It may be understood that the source and destination MAC addresses of the first data packet are addresses encapsulated at the data link layer.

S402: The first node sends the first data packet on a broadcast channel. Correspondingly, the second node receives the first data packet on the broadcast channel.

The broadcast channel in this application may be one of three predefined broadcast channels. It should be understood that the data packet generated by the first node may be sent on the three broadcast channels in turn.

It may be understood that, if neighboring nodes of the first node perform listening on the broadcast channel, all the neighboring nodes of the first node may receive the first data packet. For ease of description, in this application, the second node in the neighboring nodes of the first node is used as an example to describe a manner in which the neighboring node of the first node subsequently processes the received first data packet.

S403: The second node determines that the destination MAC address of the first data packet is the broadcast MAC address or a MAC address of any node in the multi-hop network.

Optionally, when the destination MAC address of the first data packet is a MAC address of any neighboring node of the first node, a manner in which the second node processes the first data packet may include at least one of the following: returning an ACK packet, forwarding the first data packet, discarding the first data packet, or parsing the first data packet.

Optionally, when the destination MAC address of the first data packet is the broadcast MAC address, a manner in which the second node processes the first data packet may include at least one of the following: not returning an ACK packet, forwarding the first data packet, or parsing the first data packet.

In this embodiment of this application, a plurality of nodes in the multi-hop network may send and receive data packets on the broadcast channel. Therefore, a graph topology may be formed between the plurality of nodes. In comparison with a tree topology, in this graph topology, there is no fixed binding relationship between two nodes. To be specific, any node in the multi-hop network may send a data packet to another node or receive a data packet from another node on the broadcast channel, and does not need to communicate with a parent node through an encrypted channel formed between the node and the parent node. Therefore, according to the method provided in this application, free route switching can be implemented. In addition, in this manner of sending and receiving data packets on the broadcast channel, communication can be performed without waiting for a slot allocated to the node to be reached. This effectively reduces an end-to-end communication delay.

The following describes in detail the manner in which the second node processes the first data packet with reference to two examples.

**Example 1**: The MAC address of the first data packet is a MAC address of any neighboring node of the first node.

For example, the target address of the first data packet is a MAC address of the second node, or is not a MAC address of the second node.

Optionally, when the target address of the first data packet is not the MAC address of the second node, the method 400 further includes: The second node discards the first data packet.

Optionally, when the target address of the first data packet is the MAC address of the second node, the method 400 further includes: The second node sends the ACK packet to the first node, where the ACK packet indicates that the second node has received the first data packet.

For the ACK packet, a destination MAC address is the MAC address of the first node, and a source MAC address is the MAC address of the second node.

In this embodiment of this application, the manner of sending the ACK packet to the first node can improve data transmission reliability.

In some scenarios (for example, a link deteriorates or a peer node is in an abnormal state), the second node may fail to receive the first data packet or the ACK packet sent by the second node may fail to reach the first node. In other words, within preset duration since the first data packet is sent, the first node may receive the ACK packet from the second node, or may not receive the ACK packet from the second node. It should be understood that the node may receive the ACK packet from the second node only when the target address of the first data packet is the MAC address of the second node.

Therefore, when the target address of the first data packet is the MAC address of the second node, after S402, the method 400 further includes: The first node determines whether the ACK packet from the second node is received within preset duration since the first data packet is sent.

The preset duration may be, for example, 3s or 5s. This is not limited in this application.

**Case 1**: The first node does not receive the ACK packet from the second node within the preset duration since the first data packet is sent.

In this case, the first node may schedule a backoff (backoff) window to trigger a retransmission mechanism (that is, repeatedly perform S402). Alternatively, the destination MAC address of the first data packet is modified, to obtain a second data packet, and the second data packet is sent on the broadcast channel.

A difference between the second data packet and the first data packet lies in that destination MAC addresses are different. In other words, in comparison with the first data packet, only the destination MAC address of the second data packet changes, and other content may not change.

For example, the destination MAC address of the second data packet is a MAC address of a fourth node, and the fourth node is another node different from the second node in the neighboring node of the first node.

In a possible implementation, the method 400 further includes: The first node repeatedly sends the first data packet on the broadcast channel until receiving the ACK packet from the node.

In another possible implementation, after the first data packet is repeatedly sent for N (N is a positive integer) times on the broadcast channel, when the first node does not receive the ACK packet from the second node within the preset duration since the first data packet is sent for an N^{th} (N is a positive integer) time, the method 400 further includes: The first node sends the second data packet on the broadcast channel. Descriptions of the second data packet are not described herein again.

N is an upper limit of a quantity of times of repeated sending, and a value of N may be predefined. For example, N may be another value like 3 or 5. This is not limited in this application.

It may be understood that a processing procedure performed by the fourth node after the second data packet is received is the same as the processing procedure performed by the second node after the first data packet is received. Similarly, when the first node does not receive an ACK packet from the fourth node within the preset duration since the second data packet is sent, a manner in which the first node processes the second data packet is the same as that of processing the first data packet. Details are not described herein again.

**Case 2**: The first node receives the ACK packet from the second node within the preset duration since the first data packet is sent.

In this case, the first node may not need to repeatedly send the first data packet on the broadcast channel, or may not need to send the second data packet on the broadcast channel.

With reference to Case 1 and Case 2, when the second node successfully receives the first data packet from the first node, the method 400 further includes: The second node determines whether the second node is a forwarding node; and when the second node is a forwarding node, the second node generates a third data packet based on the first data packet, and sends the third data packet on the broadcast channel; or when the second node is not a forwarding node, the second node parses the first data packet.

The third data packet is generated based on payload data in the first data packet. A difference between the third data packet and the first data packet lies in that source MAC addresses are different, and destination MAC addresses are different. For the third data packet, a source MAC address is the MAC address of the second node, and a destination MAC address is a MAC address of any neighboring node of the second node.

Optionally, that the second node determines whether the second node is a forwarding node includes: The second node obtains a network layer address of the first data packet; and determines, based on a destination address in the network layer address, whether the second node is a forwarding node.

The network layer address may be understood as an address encapsulated at a network layer for the first data packet, for example, may be an IP address or another network layer address compatible with a wireless communication technology (for example, SparkLink). This is not limited in this application.

It can be learned from the foregoing descriptions that the destination MAC address of the first data packet is a MAC address of any neighboring node of the first node in the multi-hop network, and the destination address encapsulated at the network layer for the first data packet is a unicast address. Therefore, the first data packet may be referred to as a unicast packet.

The unicast address is an address of a single device. In other words, when the first data packet is a unicast packet, a node identified by the destination address in the network layer address of the first data packet is unique.

Optionally, that the second node determines, based on the destination address in the network layer address of the first data packet, whether the second node is a forwarding node may include: when a node identified by the destination address is the second node, determining that the second node is not a forwarding node; or when the node identified by the destination address is not the second node, determining that the second node is a forwarding node.

For example, if a third node (a neighboring node of the second node) receives the third data packet, for a manner in which the third node processes the third data packet, refer to the manner in which the second node processes the first data packet. Details are not described herein again.

**Example 2**: The destination MAC address of the first data packet is the broadcast MAC address.

In this case, the second node may not need to send the ACK packet to the first node.

Optionally, the method 400 further includes: The second node determines whether the second node is a forwarding node; and when the second node is a forwarding node, the second node parses the first data packet, generates a third data packet based on the first data packet, and sends the third data packet on the broadcast channel; or when the second node is not a forwarding node, the second node discards the first data packet.

The third data packet is generated based on payload data in the first data packet. A difference between the third data packet and the first data packet lies in that source MAC addresses are different. For the third data packet, a source MAC address is the MAC address of the second node, and a destination MAC address is the broadcast MAC address.

Similar to the foregoing descriptions, the second node may determine, based on the destination address in the network layer address of the first data packet, whether the second node is a forwarding node. For descriptions of the network layer address, refer to the descriptions in Example 1. Details are not described herein again.

It can be learned from the foregoing descriptions that the destination MAC address of the first data packet is the broadcast MAC address, and the destination address encapsulated at the network layer for the first data packet is a multicast address or a broadcast address. Therefore, the first data packet may be referred to as a multicast packet or a broadcast packet.

The multicast address and the broadcast address are addresses of a plurality of devices. In other words, when the first data packet is a multicast packet or a broadcast packet, there are a plurality of nodes identified by the destination address in the network layer address of the first data packet.

That the second node determines, based on the destination address in the network layer address of the first data packet, whether the second node is a forwarding node may include: when the nodes identified by the destination address include the second node, determining that the second node is a forwarding node; or when the nodes identified by the destination address do not include the second node, determining that the second node is not a forwarding node.

For example, if a third node (a neighboring node of the second node) receives the third data packet, for a manner in which the third node processes the third data packet, refer to the manner in which the second node processes the first data packet. Details are not described herein again.

In this application, the manner in which the node determines, based on the network layer address, whether to forward the data packet can effectively avoid a broadcast storm.

Because the destination address in the network layer address of the first data packet may be a broadcast address, payload data in the first data packet may be forwarded infinitely. To avoid a resource waste, a node in the multi-hop network may stop forwarding the payload data in the first data packet based on at least one of the following conditions: A quantity of times of forwarding the payload data in the first data packet is recorded starting from sending the first data packet by a service initiator, and forwarding is stopped after Q (Q is a positive integer, and a value of Q is predefined) times of forwarding; after receiving a data packet including the payload data in the first data packet, the node determines that a source MAC address of the data packet is a child node of the node; or after receiving a data packet including the payload data in the first data packet, no other node exists.

For a manner of determining a child node and a parent node, refer to the related descriptions in FIG. 3. Details are not described herein again.

With reference to Example 1 and Example 2, the network layer address of the first data packet may further include a source address.

However, it should be noted that the source address in the network layer address of the first data packet is an address of the service initiator of the first data packet, and is not an address of a node that sends the first data packet.

Optionally, in this application, a node identified by the source address in the network layer address of the first data packet may be the first node, or may not be the first node.

For example, if a service corresponding to the first data packet is initiated by the first node, the node identified by the source address in the network layer address of the first data packet is the first node. If the first data packet is initiated by another node (for example, a fourth node), the node identified by the source address in the network layer address of the first data packet is not the first node, but the fourth node.

The fourth node may be any node in the multi-hop network. For example, the first node is a neighboring node of the fourth node.

A difference between a fourth data packet and the first data packet lies in that a source MAC address of the fourth data packet is a MAC address of the fourth node, and a destination MAC address of the fourth data packet is the destination MAC address of the first node or the broadcast MAC address.

Optionally, when the first data packet is a unicast packet, the first data packet is carried in a unicast frame, and the ACK packet is carried in an ACK frame; or when the first data packet is a broadcast packet or a multicast packet, the first data packet is carried in a broadcast frame.

The unicast frame, the ACK frame, and the broadcast frame are all generated based on a predefined basic frame structure.

For descriptions of the unicast packet, the multicast packet, and the broadcast packet, refer to the foregoing descriptions in Example 1 and Example 2. Details are not described herein again.

Optionally, the basic frame structure includes an indication field of a data type, and may indicate data types to which the first data packet, the second data packet, and the third data packet belong.

A data type of a data packet sent by a node in the multi-hop network in this application is higher layer broadcast data. In other words, the data types of the first data packet, the second data packet, and the third data packet are all higher layer broadcast data.

For example, the indication field of the data type included in the basic frame structure is 0xFF, indicating that the data type is higher layer broadcast data. In other words, an index of the data type of the higher layer broadcast data is 0xFF.

It may be understood that the data type may be indicated regardless of whether the MAC address is carried in the data packet. In other words, the indication of the data type does not depend on carrying the MAC address in the data packet. In other words, when the data packet sent by the first node does not carry the MAC address, the data packet may still include the indication field of the data type.

Optionally, the basic frame structure further includes an indication field of a frame type, and the frame type includes a unicast frame, a broadcast frame, and an ACK frame.

For example, the indication field of the frame type may be 0x00, 0x01, 0x02, or another value. This is not limited in this application.

It may be understood that 0x00, 0x01, and 0x02 each may indicate one frame type.

For example, when the indication field of the frame type is 0x00, the frame type is the unicast frame; when the indication field of the frame type is 0x01, the frame type is the ACK frame; and when the indication field of the frame type is 0x02, the frame type is the broadcast frame.

For example, when the indication field of the frame type is 0x00, the frame type is the unicast frame; when the indication field of the frame type is 0x02, the frame type is the ACK frame; and when the indication field of the frame type is 0x01, the frame type is the broadcast frame.

For example, when the indication field of the frame type is 0x01, the frame type is the unicast frame; when the indication field of the frame type is 0x00, the frame type is the ACK frame; and when the indication field of the frame type is 0x02, the frame type is the broadcast frame.

For example, when the indication field of the frame type is 0x01, the frame type is the unicast frame; when the indication field of the frame type is 0x02, the frame type is the ACK frame; and when the indication field of the frame type is 0x00, the frame type is the broadcast frame.

For example, when the indication field of the frame type is 0x02, the frame type is the unicast frame; when the indication field of the frame type is 0x00, the frame type is the ACK frame; and when the indication field of the frame type is 0x01, the frame type is the broadcast frame.

For another example, when the indication field of the frame type is 0x02, the frame type is the unicast frame; when the indication field of the frame type is 0x01, the frame type is the ACK frame; and when the indication field of the frame type is 0x00, the frame type is the broadcast frame.

Similar to the indication of the data type, the frame type may be indicated regardless of whether the MAC address is carried in the data packet. In other words, the indication of the frame type does not depend on carrying the MAC address in the data packet. In other words, when the data packet sent by the first node does not carry the MAC address, the data packet may still include the indication field of the frame type.

Similarly, the frame type may be indicated regardless of whether the data packet includes the indication field of the data type. In other words, the indication of the frame type does not depend on carrying the indication of the data type in the data packet. In other words, when the data packet sent by the first node does not carry the indication field of the data type, the data packet may still include the indication field of the frame type.

Optionally, the basic frame structure further includes an indication field of broadcast-based transmission networking.

For example, the indication field of the broadcast-based transmission networking is 0x1C, 0x1D, or another value. This is not limited in this application.

Similar to the indication of the data type and the indication of the frame type, the indication of the broadcast-based transmission networking may be indicated regardless whether the MAC address is carried in the data packet. In other words, the indication of the broadcast-based transmission networking does not depend on carrying the MAC address in the data packet. In other words, when the data packet sent by the first node does not carry the MAC address, the data packet may still include the indication field of the broadcast-based transmission networking.

Similarly, the broadcast-based transmission networking may be indicated regardless of whether the data packet includes the indication field of the data type. In other words, the indication of the broadcast-based transmission networking does not depend on carrying the indication of the data type in the data packet. In other words, when the data packet sent by the first node does not carry the indication field of the data type, the data packet may still include the indication field of the broadcast-based transmission networking.

Similarly, the broadcast-based transmission networking may be indicated regardless of whether the data packet includes the indication field of the frame type. In other words, the indication of the broadcast-based transmission networking does not depend on carrying the indication of the frame type in the data packet. In other words, when the data packet sent by the first node does not carry the indication field of the frame type, the data packet may still include the indication field of the broadcast-based transmission networking.

In conclusion, the MAC address, the indication field of the data type, the indication field of the frame type, or the indication field of the broadcast-based transmission networking carried in the data packet may be used together, or may be used independently. In other words, the data packet sent by the node may carry one or more of the following: the MAC address, the indication field of the data type, the indication field of the frame type, or the indication field of the broadcast-based transmission networking.

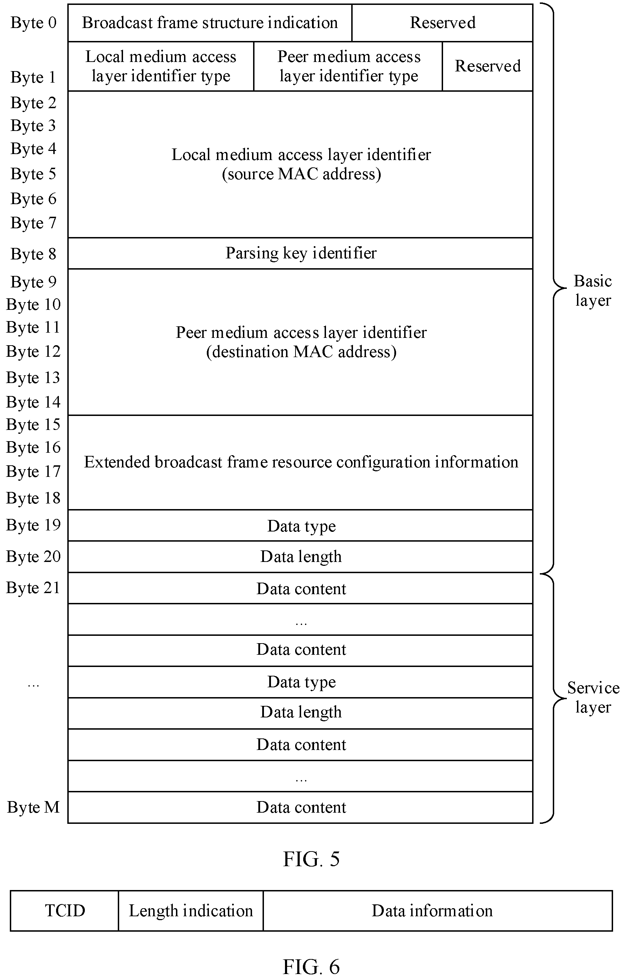

FIG. 5 is a diagram of the predefined basic frame structure according to an embodiment of this application. As shown in FIG. 5, the basic frame structure may be divided into a basic layer and a service layer. The basic layer is equivalent to an L2 link layer, the service layer is equivalent to an L3 network layer and an L4 transport layer, the basic layer corresponds to a byte 0 to a byte 20, and the service layer corresponds to a byte 21 to a byte M. For example, the byte 0 includes a frame structure indication and a reserved field, the byte 1 includes a local medium access layer identifier type, a peer medium access layer identifier type, and a reserved field, the byte 2 to the byte 7 are used to describe a local medium access layer identifier, the byte 8 is used to describe a parsing key identifier, the byte 9 to the byte 14 are used to describe a peer medium access layer identifier, the byte 15 to the byte 18 are used to describe extended broadcast frame resource configuration information, the byte 19 is used to describe a data type, the byte 20 is used to describe a data length, the byte 21 is used to describe data content, and every three consecutive bytes from the subsequent byte 22 to the byte M (M is an integer greater than 22) are used to sequentially describe a data type, a data length, and data content.

As shown in FIG. 5, in this application, the source MAC address of the data packet is located in the byte 2 to the byte 7 in the basic frame structure, and the destination MAC address of the data packet is located in the byte 9 to the byte 14 in the basic frame structure.

As shown in FIG. 5, the indication field of the data type is located in a byte used to describe the data type.

As shown in FIG. 5, both the indication field of the frame type and the indication field of the broadcast-based transmission networking are located in bytes used to describe data content.

The byte 21 shown in FIG. 5 is used as an example, and fields included in the byte 21 are described with reference to FIG. 6.

FIG. 6 is a diagram of a frame format according to an embodiment of this application. As shown in FIG. 6, the byte 21 includes a transmission channel identifier TCID, a length indication, and data information. The TCID indicates the broadcast-based transmission networking. The length indication indicates a length of the data information. A 1^{st} byte in the data information identifies the frame type, and frame content, namely, a payload (payload), starts from a 2^{nd} byte.

The address in the example in this application further includes an indication field, which is shown by using a hexadecimal value, but this should not constitute a limitation, and may alternatively be converted into a value in another numeral system.

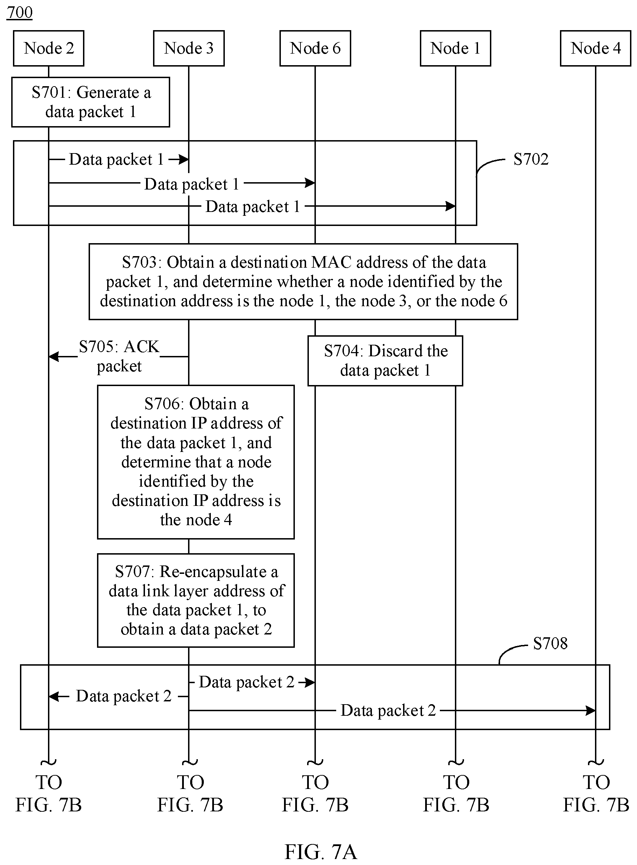

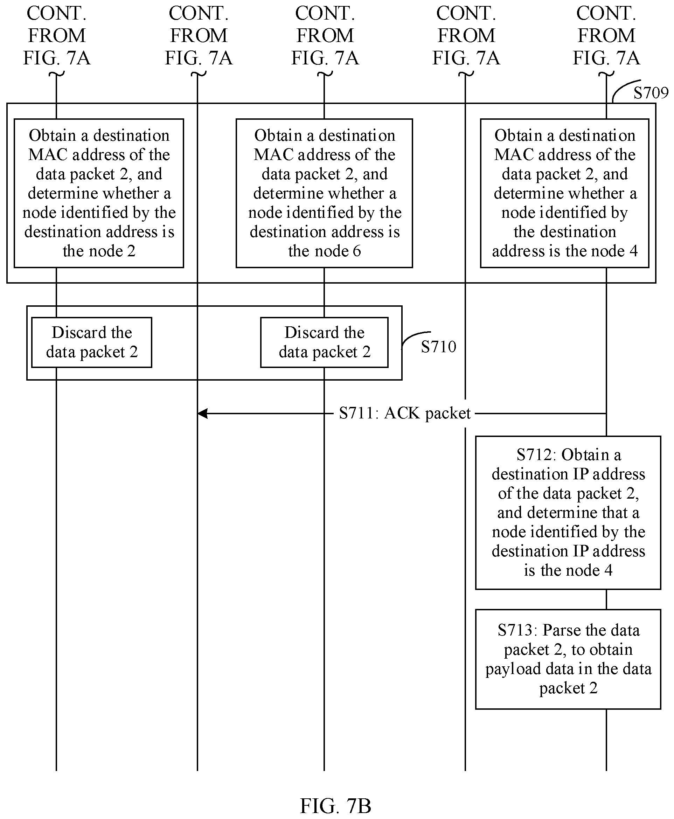

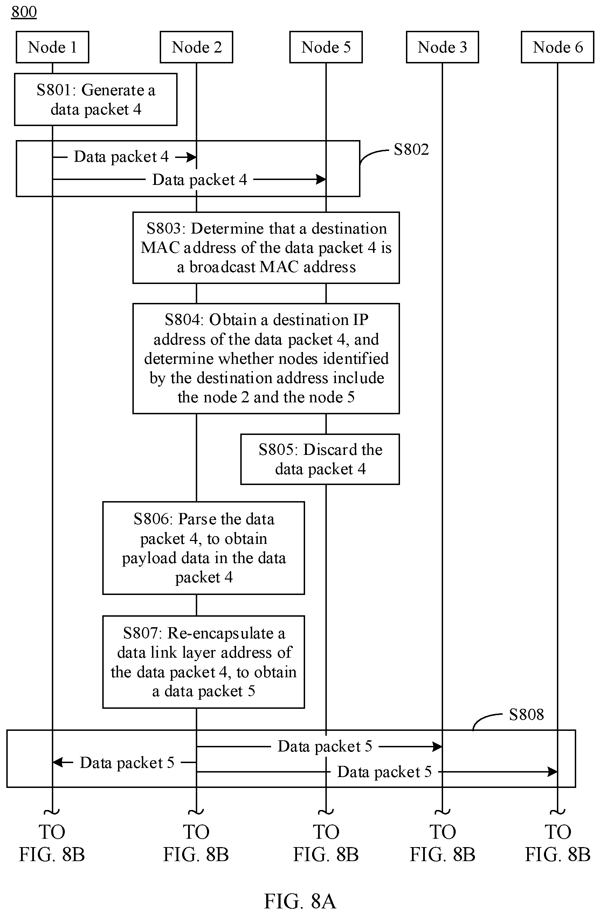

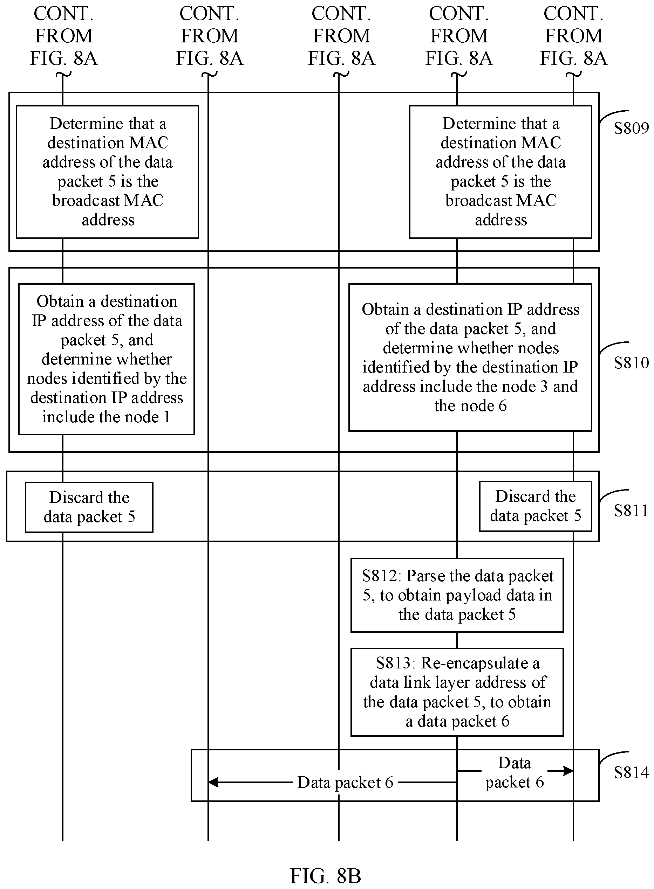

Based on the embodiment shown in FIG. 4, the following describes in more detail the method provided in this application with reference to FIG. 7A and FIG. 7B and FIG. 8A and FIG. 8B. In communication methods shown in FIG. 7A and FIG. 7B and FIG. 8A and FIG. 8B, an example in which an IP address is used as a network layer address is used for description.

It should be noted that, in embodiments shown in FIG. 7A and FIG. 7B and FIG. 8A and FIG. 8B, for steps that are the same as or similar to those in the embodiment shown in FIG. 4, refer to the foregoing related descriptions with reference to the method 400. Details are not described again.

With reference to the topology structure shown in FIG. 3, the following describes in detail the method provided in embodiments of this application with reference to FIG. 7A and FIG. 7B by using an example in which the node 2 in the topology structure shown in FIG. 3 sends a data packet to the node 4. It should be understood that, in a scenario in which the node 2 communicates with the node 4, nodes identified by a source address and a destination address in a network layer address of the transmitted data packet (also referred to as a unicast packet) are the node 2 and the node 4 respectively. In this application, the node 2 is a service initiator.

FIG. 7A and FIG. 7B are schematic flowchart of a communication method 700 according to an embodiment of this application. As shown in FIG. 7A and FIG. 7B, the method 700 may include S701 to S713. The following describes the steps in the method 700 in detail.

S701: The node 2 generates a data packet 1.

For the data packet 1, a source address encapsulated at a network layer is an address of the node 1, and a destination address encapsulated at the network layer is the node 3.

For the data packet 1, a source address encapsulated at a data link layer is a MAC address of the node 1, and a destination address encapsulated at the data link layer is a MAC address of the node 3.

It may be understood that, because the node 2 knows that the node 2 needs to communicate with the node 4, the node 2 may select the node 3 or the node 6 close to the node 4 as a forwarding node, and does not select the node 1 far away from the node 4 for forwarding. In this embodiment of this application, the node 3 is used as a forwarding node for forwarding.

S702: The node 2 sends the data packet 1 on a broadcast channel.

For descriptions of the broadcast channel, refer to the foregoing descriptions in S401. Details are not described herein again.

Because the node 2 sends the data packet 1 on the broadcast channel, the node 3, the node 6, and the node 1 that are located in a communication domain of the node 2 all can receive the data packet 1 on the broadcast channel.

S703: The node 3, the node 6, and the node 1 separately obtain a destination MAC address of the data packet 1, and determine whether a node identified by the destination address is the node 3, the node 6, or the node 1.

In this application, the destination MAC address encapsulated by the node 2 at the data link layer is the MAC address of the node 3. Therefore, the node 3, the node 6, and the node 1 separately obtain the destination MAC address of the data packet 1, and determine that the node identified by the destination MAC address is the node 3.

When the node 1 and the node 6 determine that the node identified by the destination MAC address of the data packet 1 is the node 3, S704 of discarding the data packet 1 may continue to be performed.

When the node 3 determines that the node identified by the destination MAC address of the data packet 1 is the node 3, steps in S705 to S713 may continue to be performed.

S705: The node 3 sends an ACK packet to the node 1. The ACK packet indicates that the node 3 has received the data packet 1. Correspondingly, the node 1 receives the ACK packet.

For descriptions of the ACK packet, refer to the descriptions in Example 1. Details are not described herein again.

S706: The node 3 obtains a destination IP address of the data packet 1, and determines that a node identified by the destination IP address is the node 4.

In this application, the destination IP address encapsulated by the node 2 at the network layer is an IP address of the node 4. Therefore, the node identified by the destination IP address of the data packet 1 obtained by the node 3 is the node 4.

S707: The node 3 re-encapsulates the data link layer address of the data packet 1, to obtain a data packet 2.

A difference between the data packet 2 and the data packet 1 lies in that, for the data packet 2, a destination MAC address is the MAC address of the node 4, and a source MAC address is the MAC address of the node 3.

S708: The node 3 sends the data packet 2 on the broadcast channel.

Because the node 3 sends the data packet 2 on the broadcast channel, the node 4, the node 6, and the node 2 that are located in a communication domain of the node 3 all can receive the data packet 2 on the broadcast channel.

S709: The node 4, the node 6, and the node 2 separately obtain the destination MAC address of the data packet 2, and determine whether a node identified by the destination address is the node 4, the node 6, or the node 2.

In this application, the destination MAC address encapsulated by the node 2 at the data link layer is the MAC address of the node 4. Therefore, the node 4, the node 6, and the node 2 separately obtain the destination MAC address of the data packet 2, and determine that the node identified by the destination MAC address is the node 4.

When the node 6 and the node 2 determine that the node identified by the destination MAC address of the data packet 2 is the node 4, S710 of discarding the data packet 2 continues to be performed.

When the node 4 determines that the node identified by the destination MAC address of the data packet 2 is the node 4, S711 to S713 continue to be performed.

S711: The node 4 sends an ACK packet to the node 3. The ACK packet indicates that the node 4 has received the data packet 2. Correspondingly, the node 3 receives the ACK packet.

For descriptions of the ACK packet, refer to the descriptions in Example 1. Details are not described herein again.

S712: The node 4 obtains a destination IP address of the data packet 2, and determines that a node identified by the destination IP address is the node 4.

In this application, the destination IP address encapsulated by the node 2 at the network layer is an IP address of the node 4. Therefore, the node identified by the destination IP address of the data packet 1 obtained by the node 3 is the node 4.

S713: The node 4 parses the data packet 2, to obtain payload data in the data packet 2.

It may be understood that the payload data is the same as payload data in the data packet 1.

It should be noted that, if the node 3 does not receive the data packet 1 from the node 2 in S702, or the node 2 does not receive the ACK packet from the node 3 in S705, the node 2 may repeatedly send the data packet 1 on the broadcast channel, until the ACK packet from the node 3 is received, and then continue to perform steps S706 to S713.

If the node 2 may repeatedly send the data packet 1 on the broadcast channel, and still does not receive the ACK packet from the node 3 after sending the data packet 1 for N times, the node 2 re-encapsulates the data link layer address of the data packet 1 to obtain a data packet 3, and sends the data packet 3 on the broadcast channel. A difference between the data packet 3 and the data packet 1 lies in that a destination MAC address of the data packet 3 is not the MAC address of the node 3, for example, may be a MAC address of the node 6. The node 2 sends the data packet 3 on the broadcast channel, and steps in S703 to S713 may continue to be performed, but a node in steps in which the node 3 is the only execution body needs to be replaced with the node 6.

In S701 to S707, the node 2 may be understood as the first node in the method 400, and the node 3, the node 6, and the node 1 may be understood as the second nodes in the method 400. In S708 to S713, the node 3 may be understood as the first node in the method 400, and the node 2, the node 6, and the node 4 may be understood as the second nodes in the method 400. The data packet sent by the first node may be understood as the first data packet in the method 400, the data packet received by the first node may be understood as the fourth data packet in the method 400, and the data packet forwarded by the second node may be understood as the third data packet in the method 400.

In this embodiment of this application, the data packet is sent on the broadcast channel, so that another node can receive the data packet on the broadcast channel. In other words, in this application, any node located in the multi-hop network may send a data packet to another node or receive a data packet from another node on the broadcast channel, and does not need to communicate with a parent node through an encrypted channel formed between the node and the parent node. Therefore, free route switching can be implemented. In addition, in this manner of sending and receiving data packets on the broadcast channel, communication can be performed without waiting for a slot allocated to the node to be reached. This effectively reduces an end-to-end communication delay.

With reference to the topology structure shown in FIG. 3, the following describes in detail the method provided in embodiments of this application with reference to FIG. 8A and FIG. 8B by using an example in which the node 1 in the topology structure shown in FIG. 3 sends a data packet to the node 2 and the node 3. It should be understood that, in a scenario in which the node 1 communicates with the node 2 and the node 3, in a network layer address of the transmitted data packet (also referred to as a multicast packet), a source address is the node 1, and nodes identified by a destination address are the node 2 and the node 3. In this application, the node 1 is a service initiator.

FIG. 8A and FIG. 8B are another schematic flowchart of a communication method 800 according to an embodiment of this application. As shown in FIG. 8A and FIG. 8B, the method 800 may include S801 to S814. The following describes the steps in the method 800 in detail.

S801: The node 1 generates a data packet 4.

For the data packet 4, a source address encapsulated at a network layer is an address of the node , and a destination address encapsulated at the network layer is a multicast address, which is specifically addresses of the node 2 and the node 3.

For the data packet 4, a source address encapsulated at a data link layer is a MAC address of the node 1, and a destination address encapsulated at the data link layer is a broadcast MAC address.

S802: The node 1 sends the data packet 4 on a broadcast channel.

For descriptions of the broadcast channel, refer to the foregoing descriptions in S401. Details are not described herein again.

Because the node 1 sends the data packet 4 on the broadcast channel, the node 2 and the node 5 that are located in a communication domain of the node 1 both can receive the data packet 4 on the broadcast channel.

S803: The node 2 and the node 5 determine that a destination MAC address of the data packet 4 is the broadcast MAC address.

S804: The node 2 and the node 5 obtain a destination IP address of the data packet 4, and determine whether nodes identified by the destination IP address include the node 2 and the node 5.

In this application, the destination IP address encapsulated by the node 1 at the network layer is IP addresses of the node 2 and the node 3. Therefore, the node 2 and the node 5 separately obtain the destination IP address of the data packet 4, and determine that the nodes identified by the destination IP address are the node 2 and the node 3.

When the node 5 determines that the nodes identified by the destination IP address of the data packet 4 are the node 2 and the node 3, S805 of discarding the data packet 4 continues to be performed.

When the node 2 determines that the nodes identified by the destination IP address of the data packet 4 are the node 2 and the node 3, steps S806 to S814 continue to be performed.

S806: The node 2 parses the data packet 4, to obtain payload data in the data packet 4.

S807: The node 2 re-encapsulates a data link layer address of the data packet 4, to obtain a data packet 5.

A difference between the data packet 5 and the data packet 4 lies in that a source MAC address of the data packet is the MAC address of the node 2.

S808: The node 2 sends the data packet 5 on the broadcast channel.

Because the node 2 sends the data packet 5 on the broadcast channel, the node 3, the node 6, and the node 1 that are located in a communication domain of the node 2 all can receive the data packet 5 on the broadcast channel.

S809: The node 3, the node 6, and the node 1 determine that a destination MAC address in the data packet 5 is the broadcast MAC address.

S810: The node 3, the node 6, and the node 1 obtain a destination IP address of the data packet 5, and determine whether nodes identified by the destination IP address include the node 3, the node 6, and the node 1.

Because an IP of the data packet does not change in the forwarding process, the destination IP address of the data packet 5 obtained by the node 3, the node 6, and the node 1 are the node 2 and the node 3.

When the node 6 and node 1 determine that the nodes identified by the destination IP address of the data packet 5 are the node 2 and the node 3, S811 of discarding the data packet 5 continues to be performed.

When the node 3 determines that the nodes identified by the destination IP address of the data packet 5 are the node 2 and the node 3, steps S812 to S814 continue to be performed.

S812: The node 3 parses the data packet 5, to obtain payload data in the data packet 5.

It may be understood that the payload data in the data packet 5 is the same as that in the data packet 4.

S813: The node 3 re-encapsulates a data link layer address of the data packet 5, to obtain a data packet 6.

A difference between the data packet 6 and the data packet 5 lies in that a source MAC address of the data packet is the MAC address of the node 3.

S814: The node 3 sends the data packet 6 on the broadcast channel.

Because the node 3 sends the data packet 6 on the broadcast channel, the node 4, the node 6, and the node 2 that are located in a communication domain of the node 3 all can receive the data packet 5 on the broadcast channel. When determining that a destination IP address of the data packet 6 is IP addresses of the node 2 and the node 3, the node 4, the node 6, and the node 2 discard the packet.

In S801 to S807, the node 1 may be understood as the first node in the method 400, and the node 2 and the node 5 may be understood as the second nodes in the method 400. In S808 to S813, the node 2 may be understood as the first node in the method 400, and the node 1 and the node 6 may be understood as the second nodes in the method 400. In S814, the node 3 may be understood as the first node in the method 400, and the node 2 and the node 6 may be understood as the second nodes in the method 400. The data packet sent by the first node may be understood as the first data packet in the method 400, the data packet received by the first node may be understood as the fourth data packet in the method 400, and the data packet forwarded by the second node may be understood as the third data packet in the method 400.

In this embodiment of this application, the data packet is sent on the broadcast channel, so that another node can receive the data packet on the broadcast channel. In other words, in this application, any node located in the multi-hop network may send a data packet to another node or receive a data packet from another node on the broadcast channel, and does not need to communicate with a parent node through an encrypted channel formed between the node and the parent node. Therefore, free route switching can be implemented. In addition, in this manner of sending and receiving data packets on the broadcast channel, communication can be performed without waiting for a slot allocated to the node to be reached. This effectively reduces an end-to-end communication delay.

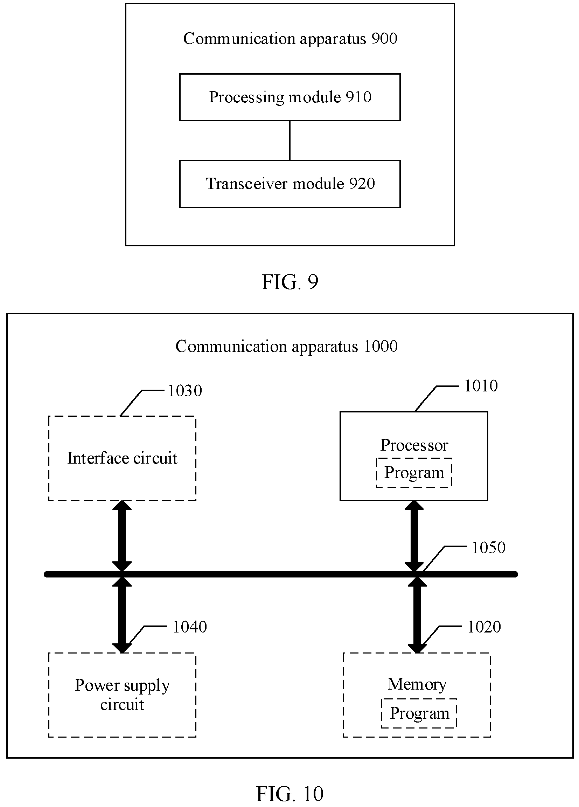

The foregoing describes in detail the methods provided in embodiments of this application with reference to FIG. 1 to FIG. 8B. The following describes in detail apparatuses provided in embodiments of this application with reference to FIG. 9 and FIG. 10.

FIG. 9 and FIG. 10 are diagrams of possible apparatuses according to embodiments of this application. These apparatuses may be configured to implement functions of the first node or the second node in the foregoing method embodiments, and therefore can also implement beneficial effect of the foregoing method embodiments.

FIG. 9 is a block diagram of a communication apparatus according to an embodiment of this application. As shown in FIG. 9, a communication apparatus 900 includes a processing module 910 and a transceiver module 920.

In a possible design, the communication apparatus 900 is configured to implement a function of the first node in the method embodiment shown in FIG. 4.

For example, the processing module 910 is configured to generate a first data packet, and the transceiver module 920 is configured to send the first data packet on a broadcast channel.

Optionally, the transceiver module 920 is further configured to repeatedly send the first data packet on the broadcast channel if no acknowledgment ACK packet from the second node is received within preset duration since the first data packet is sent, where a destination MAC address of the ACK packet is the MAC address of the first node.

Optionally, the transceiver module 920 is further configured to send a second data packet on the broadcast channel if no ACK packet from the second node is received within the preset duration since the first data packet is repeatedly sent for an N^{th} time, where the second data packet is the unicast packet, a destination MAC address of the second data packet is different from the destination MAC address of the first data packet, and N is a positive integer.

For more detailed descriptions of the processing module 910 and the transceiver module 920, directly refer to the related descriptions in the embodiment shown in FIG. 4. Details are not described herein again.

In another possible design, the communication apparatus 900 is configured to implement a function of the second node in the method embodiment shown in FIG. 4.

For example, the transceiver module 920 is configured to receive a first data packet from a first node on a broadcast channel; and the processing module 910 is configured to determine that a destination MAC address of the first data packet is a broadcast MAC address or a MAC address of any neighboring node of the first node.

Optionally, the processing module 910 is further configured to discard the first data packet.

Optionally, the transceiver module 920 is further configured to send an acknowledgment ACK packet to the first node.

Optionally, the processing module 910 is further configured to determine whether the communication apparatus 900 is a forwarding node.

Optionally, the processing module 910 is further configured to: when the communication apparatus 900 is a forwarding node, generate a third data packet based on payload data in the first data packet; and the transceiver module 920 is further configured to send the third data packet on the broadcast channel.

Optionally, the processing module 910 is further configured to: when the communication apparatus 900 is not a forwarding node, parse the first data packet or discard the first data packet.

Optionally, the processing module 910 is further configured to: obtain a destination address in a network layer address of the first data packet; and determine, based on the destination address, whether the second node is a forwarding node.

For more detailed descriptions of the processing module 910 and the transceiver module 920, directly refer to the related descriptions in the embodiment shown in FIG. 4. Details are not described herein again.

It should be noted that the communication apparatus 900 may include a sending module, but does not include a receiving module. Alternatively, the communication apparatus 900 may include a receiving module, but does not include a sending module. This may be specifically determined based on whether the foregoing solution performed by the communication apparatus 900 includes a sending action and a receiving action. It may be understood that because the communication apparatus 900 has a communication function, the communication apparatus 900 may also be referred to as a communication apparatus.

FIG. 10 is another block diagram of an apparatus according to an embodiment of this application. As shown in FIG. 10, the communication apparatus 1000 includes at least one processor 1010. The at least one processor 1010 may be configured to execute a computer program or instructions in a memory, to implement the steps performed by the first node or the steps performed by the second node in the foregoing method embodiments.

The processor 1010 may be a general-purpose processor, a dedicated processor, or the like, for example, may be a baseband processor or a central processing unit. The baseband processor may be configured to process a communication protocol and communication data. The central processing unit may be configured to control the apparatus (for example, the first node, the second node, or the chip), execute a software program, and process data of the software program.

Optionally, the communication apparatus 1000 may further include at least one memory 1020, configured to store the instructions executed by the processor 1010, or store input data required by the processor 1010 to run the instructions, or store data generated after the processor 1010 runs the instructions. The at least one processor 1010 and the at least one memory 1020 may be separately disposed. For example, each memory may be connected to one or more processors, so that the connected processors can read information from the memory, and store and/or write information into the memory. Alternatively, the at least one processor 1010 and the at least one memory 1020 may be integrated together. For example, one processor may be integrated with one or more memories.

Optionally, the communication apparatus 1000 further includes an interface circuit 1030, which may be configured to transmit data and/or signaling. The at least one processor 1010 and the interface circuit 1030 are coupled to each other. It may be understood that the interface circuit 1030 may be a transceiver, an input/output circuit, a bus, a module, a pin, or another type of interface circuit. In the input/output circuit, an input circuit may be configured for receiving, and an output interface may be configured for sending.

Optionally, the communication apparatus 1000 further includes a power supply circuit 1040, and the power supply circuit 1040 may be configured to supply power to the communication apparatus 1000.

When the communication apparatus 1000 is used in the methods shown in the foregoing embodiments, the at least one processor 1010 is configured to perform a function of the processing unit, and the interface circuit 1030 is configured to perform a function of the receiving unit and/or a function of the sending unit. Whether the interface circuit 1030 is configured for sending or receiving may be specifically determined based on whether the interface circuit is configured to perform a sending action or a receiving action in the solution performed by the communication apparatus 1000.

It may be understood that when the communication apparatus 1000 is a communication device (for example, the first node or the second node), the interface circuit 1030 may be a transceiver, and may specifically include a transmitter and a receiver. The transmitter is configured to send a signal, and the receiver is configured to receive a signal. When the communication apparatus 1000 is a chip used in a communication device, the interface circuit 1030 may be an input/output circuit, a bus, a module, a pin, or another type of interface circuit. In the input/output circuit, an input circuit may be configured for receiving, and an output interface may be configured for sending.

It should be understood that in the communication apparatus 1000 shown in FIG. 10, the processor 1010 may correspond to the processing module 910 in the foregoing apparatus 900, and the interface circuit 1030 may correspond to the transceiver module 920 in the foregoing apparatus 900.

It should be further understood that the coupling in embodiments of this application is an indirect coupling or a communication connection between apparatuses, units, or modules, may be in an electrical, mechanical, or other form, and is used for information exchange between the apparatuses, the units, or the modules. A specific connection medium between the at least one processor 1010, the at least one memory 1020, the interface circuit 1030, and the power supply circuit 1040 is not limited in embodiments of this application. In this embodiment of this application, in FIG. 10, the processor 1010, the memory 1020, the interface circuit 1030, and the power supply circuit 1040 are connected through a bus 1050. The bus 1050 is represented by a thick line in FIG. 10. A manner of connection between other components is merely a schematic illustration and is not intended for limitation. The bus may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 10, but this does not indicate that there is only one bus or only one type of bus.

The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or any combination thereof. The general-purpose processor may be a microprocessor, or may be any conventional processor, or the like.

The steps of the methods disclosed with reference to embodiments of this application may be directly performed and completed by a hardware decoding processor, or may be performed and completed by using a combination of hardware in a decoding processor and a software module. The software module may be located in a mature storage medium in the field, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

The memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that memories in the system and the methods described in this specification include but are not limited to the memories and memories of any other suitable type.

All or some of the methods provided in the foregoing embodiments may be implemented by software, hardware, firmware, or any combination thereof. When software is used for implementation, all or some of the methods may be implemented in a form of a computer program product. The computer program product may include one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic disk), an optical medium (for example, a DVD), a semiconductor medium (for example, a solid state disk (solid state disk, SSD)), or the like.

This application further provides a computer program product. The computer program product includes a computer program (which may also be referred to as code or instructions). When the computer program runs, the method performed by the first node or the method performed by the second node in the embodiment shown in FIG. 4 is performed.

This application further provides a computer-readable storage medium. The computer-readable storage medium stores a computer program (which may also be referred to as code or instructions). When the computer program runs, the method performed by the first node or the method performed by the second node in the embodiment shown in FIG. 4 is performed.

This application further provides a communication system. The communication system includes the first node and the second node.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for convenient and brief description, for a detailed working process of the foregoing system, apparatus, and unit, refer to a corresponding process in the method embodiments. Details are not described herein again.

In the several embodiments provided in this application, it should be understood that the disclosed system, apparatus, and method may be implemented in another manner. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, and may be located at one location, or may be distributed on a plurality of network units. Some or all of the units may be selected based on an actual requirement to achieve the objectives of the solutions of embodiments.

In addition, functional units in embodiments of this application may be integrated into one processing unit, or each unit may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or the like) to perform all or some of the steps of the methods described in embodiments of this application. The storage medium includes: any medium that can store program code, such as a USB flash drive, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a first node, wherein the first node is a node in a multi-hop network formed based on a wireless communication technology, and the method comprises:
generating a first data packet, wherein a destination medium access control MAC address of the first data packet is a MAC address of any neighboring node of the first node or a broadcast MAC address; and
sending the first data packet on a broadcast channel.

2. The method according to claim 1, wherein the destination MAC address of the first data packet is the broadcast MAC address, and the first data packet is a broadcast packet or a multicast packet.

3. The method according to claim 1 or 2, wherein the first data packet is carried in a broadcast frame, and the broadcast frame is generated based on a predefined basic frame structure.

4. The method according to claim 1, wherein the destination MAC address of the first data packet is a MAC address of any neighboring node of the first node, and the first data packet is a unicast packet.

5. The method according to claim 1 or 4, wherein the first data packet is carried in a unicast frame, and the unicast frame is generated based on a predefined basic frame structure.

6. The method according to claim 4 or 5, wherein the destination MAC address of the first data packet is a MAC address of a second node, and the second node is a neighboring node of the first node; and
the method further comprises:
repeatedly sending the first data packet on the broadcast channel if no acknowledgment ACK packet from the second node is received within preset duration since the first data packet is sent, wherein
a destination MAC address of the ACK packet is a MAC address of the first node.

7. The method according to claim 6, wherein the method further comprises:
sending a second data packet on the broadcast channel if no ACK packet from the second node is received within the preset duration since the first data packet is repeatedly sent for an N^{th} time, wherein the second data packet is the unicast packet, a destination MAC address of the second data packet is different from the destination MAC address of the first data packet, and N is a positive integer.

8. The method according to claim 6 or 7, wherein the ACK packet is carried in an ACK frame, and the ACK frame is generated based on the predefined basic frame structure.

9. The method according to any one of claims 3, 5, and 8, wherein the basic frame structure comprises an indication field of a data type.

10. The method according to claim 9, wherein the indication field of the data type is 0xFF, and a data type of the first data packet is higher layer broadcast data.

11. The method according to any one of claims 3, 5, and 8 to 10, wherein the basic frame structure comprises an indication field of a frame type, and the frame type comprises a unicast frame, a broadcast frame, or an ACK frame.

12. The method according to claim 11, wherein when the indication field of the frame type is 0x00, the frame type is the unicast frame; when the indication field of the frame type is 0x01, the frame type is the ACK frame; and when the indication field of the frame type is 0x02, the frame type is the broadcast frame.

13. The method according to any one of claims 3, 5, and 8 to 12, wherein the basic frame structure comprises an indication field of broadcast-based transmission networking.

14. The method according to claim 13, wherein the indication field of the broadcast-based transmission networking is 0x1C or 0x1D.

15. A communication method, applied to a second node, wherein the second node is a neighboring node of a first node in a multi-hop network formed based on a wireless communication technology, and the method comprises:
receiving a first data packet from the first node on a broadcast channel, wherein the first node is a node in the multi-hop network; and
determining that a destination medium access control MAC address of the first data packet is the broadcast MAC address or a MAC address of any neighboring node of the first node.

16. The method according to claim 15, wherein the destination MAC address of the first data packet is the broadcast MAC address, and the first data packet is a broadcast packet or a multicast packet.

17. The method according to claim 15 or 16, wherein the first data packet is carried in a broadcast frame, and the broadcast frame is generated based on a predefined basic frame structure.

18. The method according to claim 15, wherein the destination MAC address of the first data packet is a MAC address of any neighboring node of the first node, and the first data packet is a unicast packet.

19. The method according to claim 15 or 18, wherein the first data packet is carried in a unicast frame, and the unicast frame is generated based on a predefined basic frame structure.

20. The method according to claim 18 or 19, wherein the destination MAC address of the first data packet is not a MAC address of the second node, and the method further comprises:
discarding the first data packet.

21. The method according to claim 18 or 19, wherein the destination MAC address of the first data packet is a MAC address of the second node, and the method further comprises:
sending an acknowledgment ACK packet to the first node, wherein the ACK packet indicates that the second node has received the first data packet.

22. The method according to claim 21, wherein the ACK packet is carried in an ACK frame, and the ACK frame is generated based on the predefined basic frame structure.

23. The method according to any one of claims 17, 19, and 22, wherein the basic frame structure comprises an indication field of a data type.

24. The method according to claim 23, wherein the indication field of the data type is 0xFF, and a data type of the first data packet is higher layer broadcast data.

25. The method according to any one of claims 17, 19, and 22 to 24, wherein the basic frame structure comprises an indication field of a frame type, and the frame type comprises a unicast frame, a broadcast frame, or an ACK frame.

26. The method according to claim 25, wherein when the indication field of the frame type is 0x00, the frame type is the unicast frame; when the indication field of the frame type is 0x01, the frame type is the ACK frame; and when the indication field of the frame type is 0x02, the frame type is the broadcast frame.

27. The method according to any one of claims 17, 19, and 22 to 26, wherein the basic frame structure comprises an indication field of broadcast-based transmission networking.

28. The method according to claim 27, wherein the indication field of the broadcast-based transmission networking is 0x1C or 0x1D.

29. The method according to any one of claims 15 to 28, wherein the method further comprises:
determining whether the second node is a forwarding node; and
when the second node is a forwarding node, generating a third data packet based on payload data in the first data packet, and sending the third data packet on the broadcast channel; or
when the second node is not a forwarding node, parsing the first data packet or discarding the first data packet, wherein
a source MAC address of the third data packet is different from that of the first data packet, and a destination MAC address of the third data packet is a MAC address of any node or the broadcast MAC address.

30. The method according to claim 29, wherein determining whether the second node is a forwarding node comprises:
obtaining a destination address in a network layer address of the first data packet; and
determining, based on the destination address, whether the second node is a forwarding node.

31. A communication apparatus, comprising one or more functional units, configured to implement the method according to any one of claims 1 to 14, or configured to implement the method according to any one of claims 15 to 30.

32. A communication apparatus, comprising a processor, wherein the processor is configured to execute program code, so that the communication apparatus implements the method according to any one of claims 1 to 14, or implements the method according to any one of claims 15 to 30.

33. A computer-readable storage medium, wherein the computer-readable storage medium stores a computer program, and when the computer program is executed by a processor, the method according to any one of claims 1 to 14 is performed, or the method according to any one of claims 15 to 30 is performed.

34. A computer program product, comprising a computer program, wherein when the computer program runs, the method according to any one of claims 1 to 14 is performed, or the method according to any one of claims 15 to 30 is performed.
